# EUROPEAN PATENT APPLICATION

(11) **EP 0 809 182 A1**
(43) Date of publication of application: **26.11.1997**
(21) Application number: 97107869.6
(22) Date of filing: 14.05.1997
(51) Int. Cl.: G06F 9/445, G06F 17/60

(54) **Application software distribution system and method, and medium storing application software distributing program**

(30) Priority: 20.05.1996 JP 148666/96
(71) Applicant: NEC CORPORATION, Tokyo (JP)
(72) Inventor: Noguchi, Makoto, Minato-ku , Tokyo (JP)
(74) Representative: von Samson-Himmelstjerna, Friedrich R., Dipl.-Phys.

(57) **Abstract**

General-purpose application software including a plurality of functions (1,2,...,n) is stored on a server computer (101). A purchaser (112) of the general-purpose application software has minimum functions (1,2,...,n) he needs sent (S303) from the server computer (101) to a local computer (107), and executes (S305) them on the local computer (107). The server computer (101) authenticates (S302) a purchaser (112) and charges (S304) him fees commensurate with the functions (1,2,...,n) that have actually been used.

## Description

### BACKGROUND OF THE INVENTION

### 1.Field of the Invention

The present invention relates to an application software distributing system, an application software distributing method and a computer-readable medium storing an application software distributing program, which distribute minimum functions of application software a user needs at a price commensurate with the functions. 2.Description of the Related Art

Conventionally, general-purpose application software is recorded on a recording medium such as a floppy disk or a CD-ROM, and sold via a wholesale store, a retail store, etc. Its license is sold to a user such that the recording medium is handed over to a user in exchange for the money in a store.

On the other hand, Japanese Laid-open Patent Application No. 4-127397, for instance, discloses as a conventional technique a software selling system in which, instead of distributing media on which application software is recorded, application software is transmitted to a software vending machine via a network and recorded onto recording media in the vending machine, and the application software is sold to users from the vending machine.

As described above, in the conventional distribution and charging systems of general-purpose application software, a user himself needs to purchase a software license in advance, install the software into a local computer, and perform management and maintenance operations for alteration and updating of the software on the local computer. Also in the above-mentioned software selling system of Japanese Laid-open Patent Application No. 4-127397, what a user can get is a medium on which software is recorded and hence he is still required to purchase a software license in advance and perform installation as well as management and maintenance operations.

In the above-described conventional distribution and charging systems of application software, a user needs to purchase application software considerably before he actually uses its various functions, and to install it into a local computer and set it up in advance. Therefore, he is required to purchase a license for large, general-purpose application software including a wide variety of functions such as a word processor and drawing software, which functions include some which the purchaser might not want or need.

Another problem is that because general-purpose application software is sold in the form of such large-scale software, programs of functions that are not used by a user uselessly occupy the storage medium of a local computer for a long time.

Further, since it is necessary that general-purpose software including a certain function be installed into a local computer and set up before the function is actually used, a user needs to maintain and manage, by himself, the general-purpose software stored on the storage medium of the local computer. For example, when the general-purpose software is altered or updated, the user needs to obtain updated general-purpose software each time and to maintain it by himself, which is a heavy burden.

The present invention has been made in view of the above circumstances, and has as an object providing a system which allows a user who needs certain functions of general-purpose software to purchase, and use, necessary minimum functions at prices commensurate with the functions when he needs the functions.

Another object of the invention is to greatly reduce the number of steps that a user is required to perform to install general-purpose application software onto the storage medium of a local computer and maintain and manage it.

### SUMMARY OF THE INVENTION

A first application software distributing system in accordance with the present invention comprises:
a first computer for storing application software in such a manner that said application software is divided into at least two programs; and
a second computer for downloading one of said at least two programs from said first computer and executing said program.

In a second application software distributing system in accordance with the present invention, said first computer in the first application software distributing system in accordance with the present invention stores charging information so as to charge a user executing said program for execution of said program.

In a third application software distributing system in accordance with the present invention, said first computer in the first application software distributing system in accordance with the present invention authenticates a user who requests to download said program, and said second computer in the first application software distributing system in accordance with the present invention downloads said program from said first computer and executes said program when said user has been authenticated.

In a fourth application software distributing system in accordance with the present invention, said second computer in the first application software distributing system in accordance with the present invention discards said program after execution.

A fifth application software distributing system in accordance with the present invention comprises:
a first computer for storing application software in such a manner that said application software is divided into at least two programs; and
a second computer for downloading serially individual ones of said at least two programs from said first computer and executing said programs.

In a sixth application software distributing system in accordance with the present invention, said first computer in the fifth application software distributing system in accordance with the present invention accumulates charging information each time said programs are downloaded to said second computer so as to charge a user executing said programs for execution of said programs.

In a seventh application software distributing system in accordance with the present invention, said second computer in the fifth application software distributing system in accordance with the present invention discards each of said programs after execution, downloads one of said at least two programs identical to said discarded program from said first computer and executes said program.

### BRIEF DESCRIPTION OF THE DRAWINGS

Figure 1 is a block diagram of an embodiment of the invention.

Figure 2 is a flowchart explaining the operation of the Figure 1 embodiment.

Figure 3 is a flowchart explaining the operation of the Figure 1 embodiment.

Figure 4 is a flowchart explaining the operation of the Figure 1 embodiment.

### DETAILED DESCRIPTION OF THE PREFERRED EMBODIMENTS

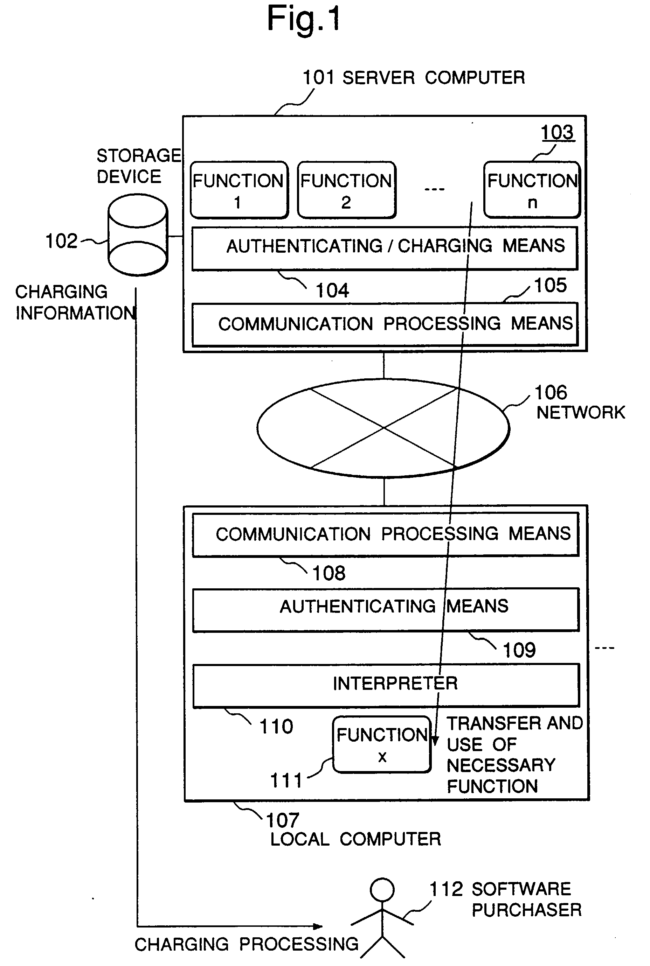

According to an application software distributing system of the invention, a general-purpose application to be sold is managed and maintained on a server computer (101 in Figure 1) by the developer or seller, and a purchaser can have the general-purpose application transferred via a network (106 in Figure 1) and use it on a local computer (107 in Figure 1).

General-purpose application software (hereinafter referred to as "general-purpose application") is stored on the server computer in such a manner as to be divided into small functions (103 in Figure 1). A purchaser can have only the minimum functions he needs transferred from the server computer (101 in Figure 1) and use them.

The server computer has a means (104 in Figure 1) for authenticating a purchaser and charging him a fee commensurate with a function that has actually been used by him.

According to the present invention, a purchaser of a general-purpose application no longer has to maintain or manage the general-purpose application he uses. Further, he can purchase, and use, a minimum function he needs at a proper price when he needs it.

Next, an embodiment of the present invention will be described in detail with reference to the drawings. Figure 1 is a drawing for explanation of the configuration of the embodiment of the invention.

Referring to Figure 1, the embodiment of the invention consists of a server computer 101, a network 106, and a plurality of local computers 107. For convenience of drawing, only one local computer 107 is shown in Figure 1.

The server computer 101 is equipped with a storage device 102, and is connected to the local computer 107 via the network 106.

The server computer 101 is equipped with a communication processing means 105 for exchanging programs, data, commands, etc. with the local computers 107, and an authenticating/charging means 104 for collating information (for instance, an ID, a password, or the like) for identifying a software purchaser (user) 112, which information is sent from a local computer 107 with information on the software purchaser 112 which is stored in a storage device or the like in advance. The server computer 101 identifies a software purchaser 112 who requests a function of a general-purpose application from among requests from a plurality of local computers 107, and records in the storage device 102 charging information for a function x (111) that has been transferred in response to the request from the software purchaser 112.

The server computer 101 is also equipped with small divisional functions 1, 2, ..., n (103) of the general-purpose application that are to be sold to the software purchasers 112. Application programs of the respective functions are stored in a section, such as the storage device 102 and a storage device within the server computer 101, that can be accessed by the server computer 101.

Like the server computer 101, the local computer 107 is connected to the network 106. The local computer 107 is equipped with a communication processing means 108 for exchanging programs, data, commands, etc. with the server computer 101, and an authenticating means 109 for receiving, from the software purchaser 112, input of information (for instance, an ID, a password, or the like) for identifying himself and authenticating himself. Thus, the local computer 107 can send the information for identifying the software purchaser 112 to the authenticating/charging means 104 of the server computer 101.

Also equipped with an interpreter 110, the local computer 107 can execute a function x (111) among functions 1, 2, ...., n (103) of the general-purpose application stored in the server computer (101), which function is sent in response to a request.

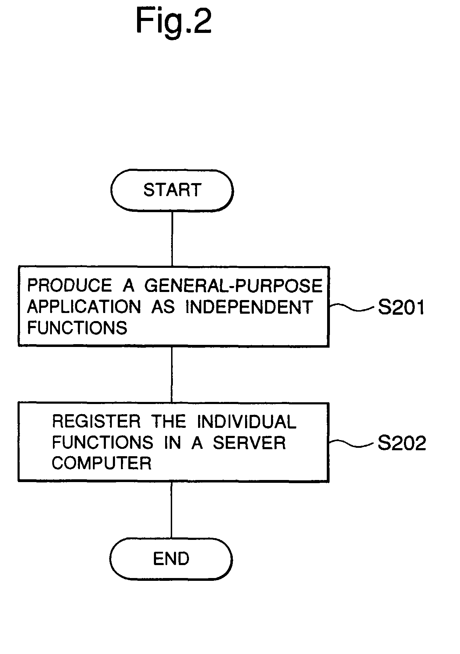

Next, referring to Figure 1 and flowcharts of Figures 2-4, the operation of the embodiment of the invention will be described in detail.

Referring to Figure 2, first, a developer of general-purpose application develops it as a plurality of programs 103 that are independent of each other on a function-by-function basis rather than as a single, large program (step S201). The developed programs 103 of the respective functions are registered in the server computer 101 (step S202).

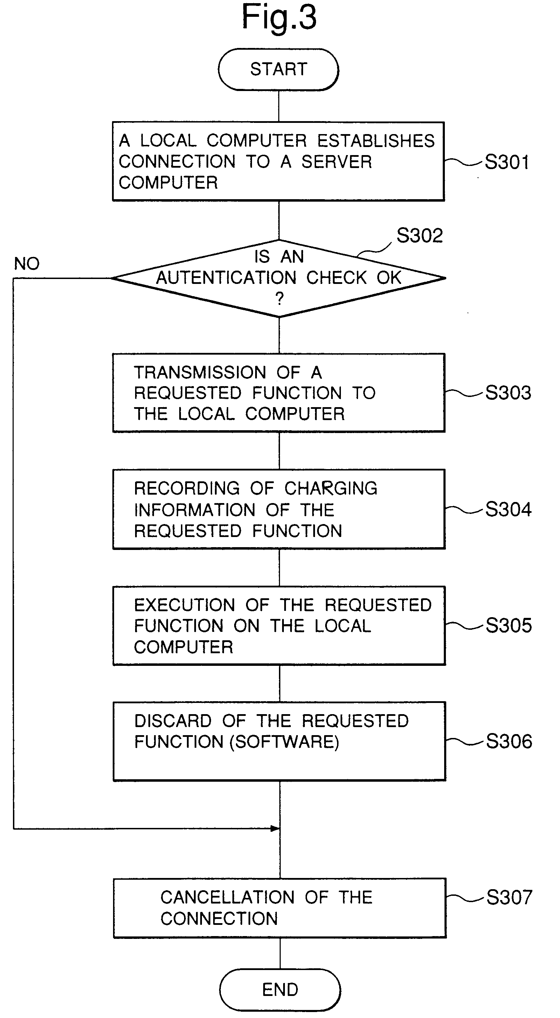

Next, referring to Figure 3, a software purchaser 112 who needs a certain function of the general-purpose application connects the local computer 107 to the server computer 101 via the network 106 (step S301).

The authenticating means 109 of the local computer 107 sends authentication information of the software purchaser 112 to the authenticating/charging means 104 of the server computer 101. In response, the authenticating/charging means 104 of the server computer 101 performs an authentication check (step S302).

If the authentication check is satisfied, the server computer 101 transmits, to the local computer 107, a program 111 of the requested function x among functions 1, 2, ...., n (103) of the general-purpose application (step S303)

The authenticating/charging means 104 of the server computer 101 records charging information for the requested function corresponding to the software purchaser 112 onto the storage device 102 (step S304).

The requested function x (111) is executed by the interpreter 110 of the local computer 107 (step S305).

The executed function x (111) is discarded without being maintained or stored in the local computer 107 (step S306).

Finally, the connection between the local computer 107 and the server computer 101 is canceled (step S307).

On the other hand, if the authentication check at step S302 is not satisfied, branching to step S307 is immediately effected whereby the connection between the local computer 107 and the server computer 101 is canceled.

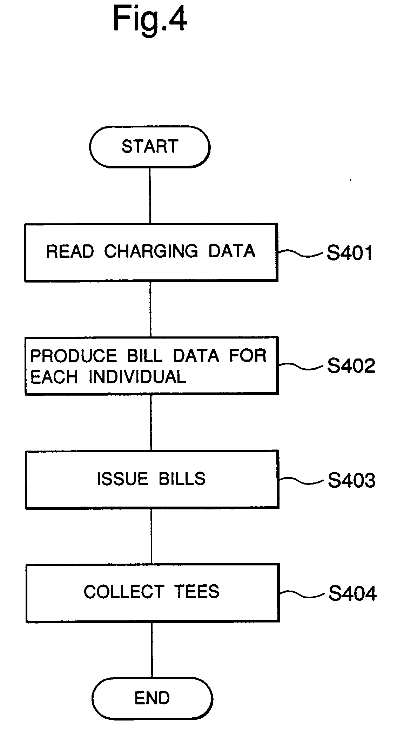

Referring to Figure 4, the authenticating/charging means 104 of the server computer 101 reads charging information that is stored in the storage device 102 of the server computer 101 (step S401), produces bill data for each authenticated software purchaser 112 (step S402), and issues bills (step S403). The developer (or seller) of the software collects fees based on those bills (step S404).

Next, for more specific description of the embodiment of the invention, a case of distributing a word processor program as an example of a general-purpose application and effecting charging therefor will be described.

A "text input/edit function," a "file read/write function," a "print function," and a "spell check function" as functions 1, 2, ...., n (103) are registered in the server computer 101. The Internet can be used as the network 106.

Referring to the flowchart of Figure 2, a developer of a word processor program develops independent programs that correspond to the respective functions of the "text input/edit function," "file read/write function," "print function," and "spell check function" by using a general-purpose interpreter language.

Next, the respective developed functions are registered into the server computer 101.

Referring to the flowchart of Figure 3, a software purchaser 112 who wants to purchase the word processor program and correct an existing document connects the local computer 107 to the server computer 101, and sends, for authentication, his ID or password (step S301).

Next, once the authentication check is satisfied, he has the "file read/write function" sent from the server computer 101 (steps S302 and S303). At this time, the server computer 101 records charging information (step S304).

Next, he causes the interpreter 110 of the local computer 107 to read an existing document by using the "file read/write function" (step S305). When the execution of the program has been finished, the "file read/write function" is discarded from the local computer 107 (step S306) and the connection with the server computer 101 is canceled (step S307).

Next, the software purchaser 112 performs a text edit operation by executing the "text input/edit function" on the local computer 107 according to the flow of Figure 3 in the same manner as in requesting and executing the "file read/write function."

Next, he performs a spell check by executing the "spell check function" on the local computer 107 according to the flow of Figure 3.

Next, he performs a printing by executing the "print function" on the local computer 107 according to the flow of Figure 3.

Next, he writes a modified document to the file by executing the "file read/write function" on the local computer 107 according to the flow of Figure 3.

In the above manner, the software purchaser 112 can purchase the license of functions he will actually use and can use those, by repeating the flow of Figure 3 by the number of times he needs for the functions he needs.

The seller of the general-purpose application collects fees from the respective software purchasers 112 based on the stored charging data according to the flow of Figure 4.

As described above, the invention provides various advantages described below.

As a first advantage, since minimum functions of a latest version of a general-purpose application are always managed by a software developer on a server computer, a purchaser of the general-purpose application can purchase the latest version of a function he needs at a lowest price when he actually uses it.

As a second advantage, a developer of a general-purpose application can set a price in a flexible manner according to a function actually used and the number of times of its use, as well as recognize, on a real-time basis, how and by whom a developed general-purpose application is used.

As a third advantage, since a latest version of a general-purpose application is always managed by a software developer on a server computer and is discarded after being transferred to a local computer and executed thereon, a purchaser is not required to maintain or manage the general-purpose application installed in the local computer.

As a fourth advantage, since a general-purpose application is sent from a server computer every time it is to be executed and is discarded after it is executed, a large-capacity secondary storage device is not necessary.

## Claims

1. An application software distributing system, comprising:
a first computer (101) for storing (S202) application software in such a manner that said application software is divided into at least two programs (1,2,...,n); and
a second computer (107) for downloading one of said at least two programs (1,2,...,n) from said first computer (101) and executing (S305) said program (1,2,..,n).

2. The application software distributing system as claimed in claim 1, wherein:
said first computer (101) stores charging information so as to charge a user (112) executing said program (1,2,...,n) for execution (S305) of said program (1,2,...,n).

3. The application software distributing system as claimed in claim 1, wherein:
said first computer (101) authenticates (S302) a user (112) who requests to download said program (1,2,...,n); and
said second computer (107) downloads said program (1,2,...,n) from said first computer (101) and executes (S305) said program when said user (112) has been authenticated.

4. The application software distributing system as claimed in claim 1, wherein:
said second computer (107) discards (S306) said program (1,2,...,n) after execution (S305).

5. An application software distributing system, comprising:
a first computer (101) for storing application software in such a manner that said application software is divided into at least two programs (1,2,...,n); and
a second computer (107) for downloading serially individual ones of said at least two programs (1,2,...,n) from said first computer (101) and executing (S305) said programs (1,2,...,n).

6. The application software distributing system as claimed in claim 5, wherein:
said first computer (101) accumulates charging information (S304) each time said programs (1,2,...,n) are downloaded to said second computer (107) so as to charge a user (112) executing said programs (1,2,...,n) for execution (S305) of said programs.

7. The application software distributing system as claimed in claim 5, wherein:
said second computer (107) discards (S306) each of said programs (1,2,...,n) after execution (S305), downloads one of said at least two programs (1,2,...,n) identical to said discarded program from said first computer (101) and executes said program.

8. An application software distributing method, comprising:
transmitting (S303) one of at least two programs (1,2,...,n) constituting application software from a first computer (101) storing said application software in such a manner that said application software is divided into at least two programs (1,2,...,n) to a second computer (107) requesting to download said program (1,2,...,n); and
executing (S305) said program (1,2,...,n) on said second computer (107).

9. The application software distributing method as claimed in claim 8, further comprising the step of:
storing charging information (S304) on said first computer (101) so as to charge a user (112) executing said program (1,2,...,n) for execution (S305) of said program (1,2,...,n).

10. The application software distributing method as claimed in claim 8, further comprising the step of:
authenticating (S302) a user (112) who requests to download said program (1,2,...,n); and wherein:
said transmitting step (S303) transmits said program (1,2,...,n) from said first computer (101) to said second computer (107) when said user (112) has been authenticated; and
said executing step (S305) executes said program (1,2,...,n) on said second computer (107) when said user (112) has been authenticated.

11. The application software distributing method as claimed in claim 8, further comprising the step of:
discarding (S306) said program after execution (S305) on said second computer (107).

12. An application software distributing method, comprising:
transmitting (S303) serially individual ones of at least two programs (1,2,...,n) constituting application software from a first computer (101) storing said application software in such a manner that said application software is divided into at least two programs (1,2,...,n) to a second computer (107) requesting to download said programs; and
executing (S305) said programs (1,2,...,n) on said second computer (107).

13. The application software distributing method as claimed in claim 12, further comprising the step of:
accumulating charging information (S304) on said first computer (101) each time said programs (1,2,...,n) are downloaded to said second computer (107) so as to charge a user (112) executing said programs (1,2,...,n) for execution (S305) of said programs (1,2,...,n).

14. The application software distributing method as claimed in claim 12, further comprising the steps of:
discarding (S306) each of said programs (1,2,...,n) after execution (S305) on said second computer (107);
re-transmitting one of said at least two programs (1,2,...,n) identical to said discarded program from said first computer (101) to said second computer(107); and
re-executing said program (1,2,...,n) on said second computer (107).

15. A computer-readable medium, comprising:
a computer-readable data storage device;
an application software distributing program stored on said device, said program comprising:
a first data structure causing a first computer (101) storing application software in such a manner that said application software is divided into at least two programs (1,2,...,n) to transmit (S303) one of said at least two programs (1,2,...,n) to a second computer (107) requesting to download said program; and
a second data structure causing said second computer (107) to execute (S305) said program (1,2,...,n).

16. The computer-readable medium as claimed in claim 15, said program further comprising:
a data structure causing said first computer (101) to store charging information (S304) so as to charge a user (112) executing said program (1,2,...,n) for execution (S305) of said program (1,2,...,n).

17. The computer-readable medium as claimed in claim 15, said program further comprising:
a data structure causing said first computer (101) to authenticate (S302) a user (112) who requests to download said program (1,2,...,n); and wherein:
said first data structure causes said first computer (101) to transmit (S303) said program (1,2,...,n) to said second computer (107) when said user (112) has been authenticated; and
said second data structure causes said second computer (107) to execute (S305) said program (1,2,...,n) when said user (112) has been authenticated.

18. The computer-readable medium as claimed in claim 15, said program further comprising:
a data structure causing said second computer (107) to discard (S306) said program (1,2,...,n) after execution (S305).

19. A computer-readable medium, comprising:
a computer-readable data storage device;
an application software distributing program stored on said device, said program comprising:
a first data structure causing a first computer (101) storing application software in such a manner that said application software is divided into at least two programs (1,2,...,n) to transmit (S303) serially individual ones of at least two programs (1,2,...,n) to a second computer (107) requesting to download said programs (1,2,...,n); and
a second data structure causing said second computer (107) to execute (S305) said programs (1,2,...,n).

20. The computer-readable medium as claimed in claim 19, said program further comprising:
a data structure causing said first computer (101) to accumulate charging information (S304) each time said programs (1,2,...,n) are downloaded to said second computer (107) so as to charge a user (112) executing said programs (1,2,...,n) for execution (S305) of said programs (1,2,...,n).

21. The computer-readable medium as claimed in claim 19, said program further comprising:
a data structure causing said second computer (107) to discard (S306) each of said programs (1,2,...,n) after execution (S305), causing said first computer (101) to re-transmit (S303) one of said at least two programs (1,2,...,n) identical to said discarded program (1,2,...,n) to said second computer (107), and causing said second computer (107) to re-execute (S305) said program (1,2,...,n).
